Europäisches Patentamt

European Patent Office

Office européen des brevets

(19)

(11) Publication number: **0 233 156**
**A2**

## (12) EUROPEAN PATENT APPLICATION

(21) Application number: **87830007.8**

(22) Date of filing: **09.01.87**

(51) Int. Cl.⁴: **H 04 N 3/12**

(30) Priority: **14.01.86 IT 4753586**

(71) Applicant: **Niccolucci, Roberto, Via Ponte Seveso 19, I-20125 Milano (IT)**
Applicant: **Artioli, Enrico, Via Gian Matteo Giberti 45, I-00151 Roma (IT)**

(43) Date of publication of application: **19.08.87**
Bulletin 87/34

(72) Inventor: **Niccolucci, Roberto, Via Ponte Seveso 19, I-20125 Milano (iT)**
Inventor: **Artioli, Enrico, Via Gian Matteo Giberti 45, I-00151 Roma (IT)**

(84) Designated Contracting States: **AT BE CH DE ES FR GB GR LI LU NL SE**

(74) Representative: **de Simone, Domenico et al, Ing. Barzanò & Zanardo Roma S.p.A. Via Piemonte 26, I-00187 Roma (iT)**

(54) An optical fiber scanning device for the formation of television images.

(57) An optical fiber scanning device for the formation of television images, said device being made up of a bundle (1) of n optical fibers which are aligned at one end (2) and kept in a linear alignment by supporting means (3) so as to form a linear scanning member, and, at the other end (4), are circularly aligned and arranged around a supporting cylindrical member (5); said device being also made up of a rotatable disk (6) arranged above said supporting member (5) and provided with a hole on a circumference corresponding to the circumference consisting of the second ends (4) of said n optical fibers, in correspondence to the hole an optical fiber (7) being arranged which can rotate integrally with said disk (6) and is of the same sizes as those of the single optical fibers of the bundle (1); as well as of a motor (9) for driving said rotatable disk (6), and of a photosensitive member connected to said optical fiber, digital storage means as well as means for the transformation of the circular scanning into a television image being connected to said photosensitive member.

AN OPTICAL FIBER SCANNING DEVICE FOR THE FORMATION
OF TELEVISION IMAGES

The present invention relates to an optical fiber scanning device for the formation of televisional images. More particularly, the present invention relates to a device of the type mentioned whose operation, which is mainly based on a conversion of a linear scanning into a circular scanning, allows the transformation of radiographic images into televisional images to be obtained by conveying light through optical fibers. Such kind of transformation is obtained nowadays for almost all applications by means of two fundamental types of apparatuses.

The first one of such apparatuses is made up of a television system with a photoscintillation screen, a light intensifier and a high sensitivity telecamera.

In such kind of apparatuses, the X-ray tube generates a variable intensity flash when the subject undergoing the radiography is standing still, as usually occurs in the techniques of photographic radiography. The shooting device, which is made up of a television camera, is very sensitive and has a digital frame storage that allows the image obtained to be stopped in time.

The main drawbacks of such kind of apparatus consist in the fact that inhomogeneities in the image intensifier as well as in the high sensitive television camera tube occur.

Moreover, a time variability occurs of the tube deflecting system, particularly as regards linearity and amplitude.

The second type of apparatuses employed at the present time is made up of a diode line which are aligned and sensitive to X-rays, with mechanical scanning. In that case, a continuous lamellar bundle X-ray source is employed, while the object is scanned transversally.

The storing of the image occurs by storing the single diode elements which make up normally the line scanning, while the motion of the object determines the vertical scanning of the final televisional image.

Such apparatus employing a diode scanning has a reduced sensitivity as well as a remarkable inhomogeneity of the diodes with respect to one another.

At the present time, an additional digital storage is provided by builders of such apparatuses in order to remove the latter drawback mentioned.

A further drawback of such second type of apparatus consists in the poor contrast ratio which is not higher than 1/3-1/4.

In order to remove the drawbacks mentioned above, the Applicants have studied, and they now suggest, a device that, employing optical fibers as a light conveying means, allows a linear scanning to be transformed into a circular scanning so that the conversion of radiographic images into televisional images is definitely easier, and better results are also obtained at the same time.

Such objects are realized according to the present invention by employing a set of n optical fibers which are aligned at one end in a straight line, as a scanning device, while the same n optical fibers are arranged at the opposite end around a cylindrical member so that, by means of a rotatable disk provided with a single optical fiber arranged within a hole corresponding to the position of said second end of the bundle, one optical fiber of the bundle will be scanned each time by said single optical fiber by which the light of

0233156

the n optical fibers of the bundle is conveyed, with limited coupling losses, to a single light-sensitive member.

In that way, a scanning device is obtained which can be applied in many fields of technics, in particolar in the whole field of the so-called "X-ray non-destructive analyses", which consists for instance in the luggage check and/or people check in airports, railroad stations and the like, in general medicine, in traumatology and in computerized tomagraphy.

The device according to the present invention, in addition to the removal of the drawbacks mentioned above which are a characteristic of the apparatuses employed at the present time, also has all advantages which are a feature of said apparatuses, so that such device shows remarkably advantageous from an application standpoint.

More precisely, the device according to the present invention provides:

- a reading uniformity of the single points. This is mainly due to the fact that optical fibers have equal sizes and lengths with respect to one another so that the light losses or attenuations are irrelevant and homogeneous, and to the fact that a single light-sensitive member is employed;

- an excellent scanning linearity, which only depends on the mechanical alignment of the optical fibers;

- a sensitivity which is remarkably higher than that of the known devices, and is obtained employing a photomultiplier as the light-sensitive element;

- a higher contrast ratio, as said photomultiplier has a higher contrast ratio and a higher signal/noise ratio with respect to television cameras as well as to photodiodes.

Accordingly, it is a specific object of the present invention an optical fiber scanning device for the formation of television images, said device being made up of a bundle of n optical fibers which are aligned in a straight line, at one end, and which are kept in said straight-line alignment by supporting means so as to form a linear scanning element, and, at the other end, are circularly aligned and arranged about a supporting member; such device being also made of a rotatable disk member arranged above said supporting member and provided with a hole obtained on a circumference corresponding to that which is made up of the second end of said n optical fibers, a single optical fiber, which can rotate integrally with said disk member being arranged in correspondence with said hole; of motor means for driving said rotatable disk; and of a photosensitive member connected to said single optical fiber, digital storage means as well as means for the transformation of the circular scanning into a television image being also connected to said light-sensitive member.

According to a preferred embodiment of the device of the present invention, said n optical fibers which the bundle is made up of can be arranged along more than one concetric circumference about said supporting member, a corresponding number of holes being consequently provided on said rotatable disk member as well as a corresponding number of optical fibers arranged within each one of said holes and connected to a single light-sensitive element.

As an alternative, said optical fibers which are provided in a number corresponding to the number of holes are each one connected to a different light-sensitive element.

Further according to the present invention, m bundles of n optical fibers can be provided, said bundles being arranged along circumferences about said supporting members, so that the number of holes provided on said rotatable disk member is m, and the number of optical fibers which are each one connected to a different light-sensitive member also is m.

Preferably, said single optical fibers are of sizes equal to those of each one of said n fibers of such bundle.

Preferably, in the scanning device of the present invention, said light-sensitive element consists of a photomultiplier.

According to a further embodiment of the device of the present invention, said supporting member may also have a circumference slightly longer that the linear length of the ends of the fiber bundle, said fibers being aligned in a straight line.

More particularly, a lighting system such as for instance a LED can be provided on the first or on the last of the n fibers of each fiber bundle, so that light detected is of a remarkably higher intensity with respect to that detected through the remaining n-1 optical fibers.

The present invention will be disclosed in the following for illustrative but not for limitative purposes with particular reference to the Figures of the enclosed drawings, wherein:

Figure 1 is a lateral view, partially sectioned, of the device according to the present invention;

Figure 2 shows in particular the detail A pointed out in Figure 1;

Figure 3 shows a schematic view of the plan of the detail shown in Figure 2; and

Figure 4 shows a front view of the optical fiber linear sensor.

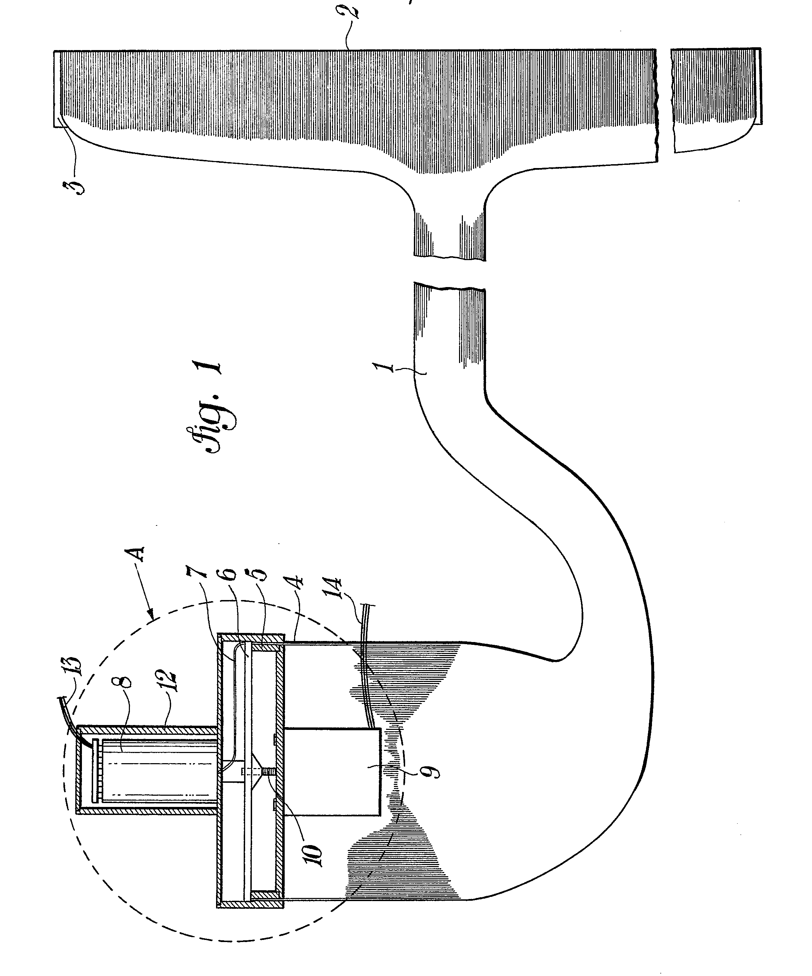

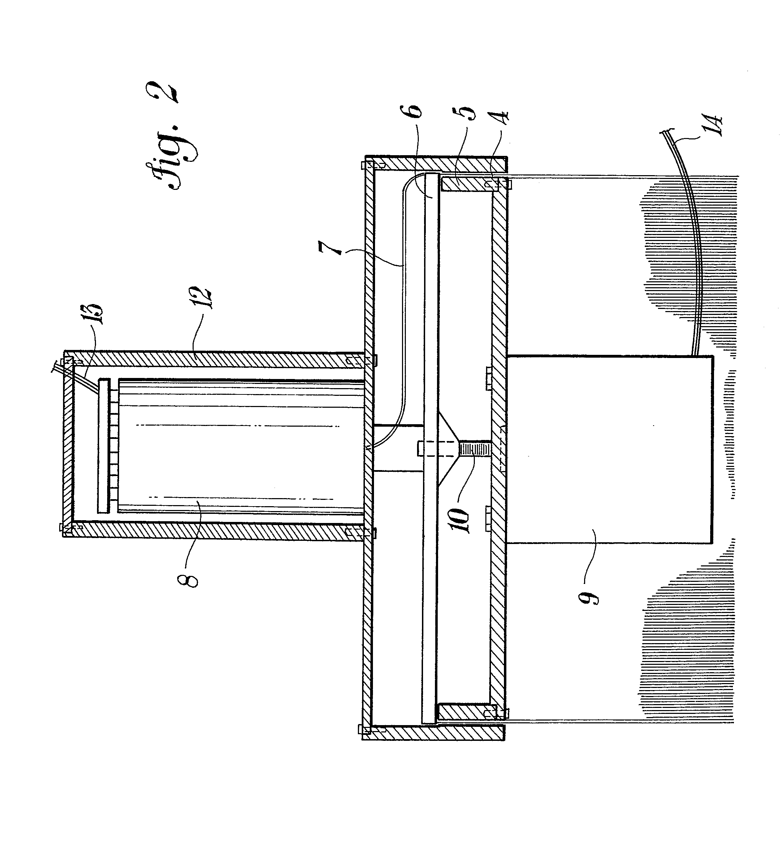

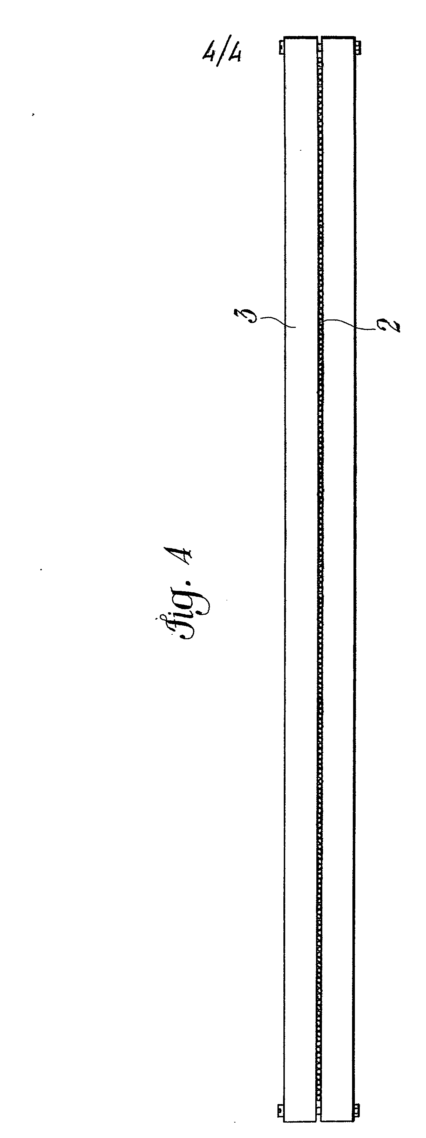

With reference to Figures 1-4, it can be observed that the device according to the present invention provides a bundle 1 of n optical fibers, one end of said fibers (the end 2; see Figures 1 and 4) is arranged linearly by means of a member 3. Such end 2 is the linear sensor of the device according to the present invention.

The opposite end 4 of the n optical fibers of the bundle 1 is arranged adherently around a cylinder 5 whose upper surface consists of a rotatable disk 6 on which a hole is obtained.

A single optical fiber 7 is provided at a point corresponding to said hole, said fiber being of sizes equal to those of the n fibers of the bundle 1 that conveys with limited coupling losses the light of each one of said n optical fibers of the bundle 1 to a light-sensitive member 8 which, in such particular instance is made up of a photomultiplier.

The rotation of the disk 6 with respect to the fixed cylinder 5 is determined by the motor 9 by means of the driving shaft 10.

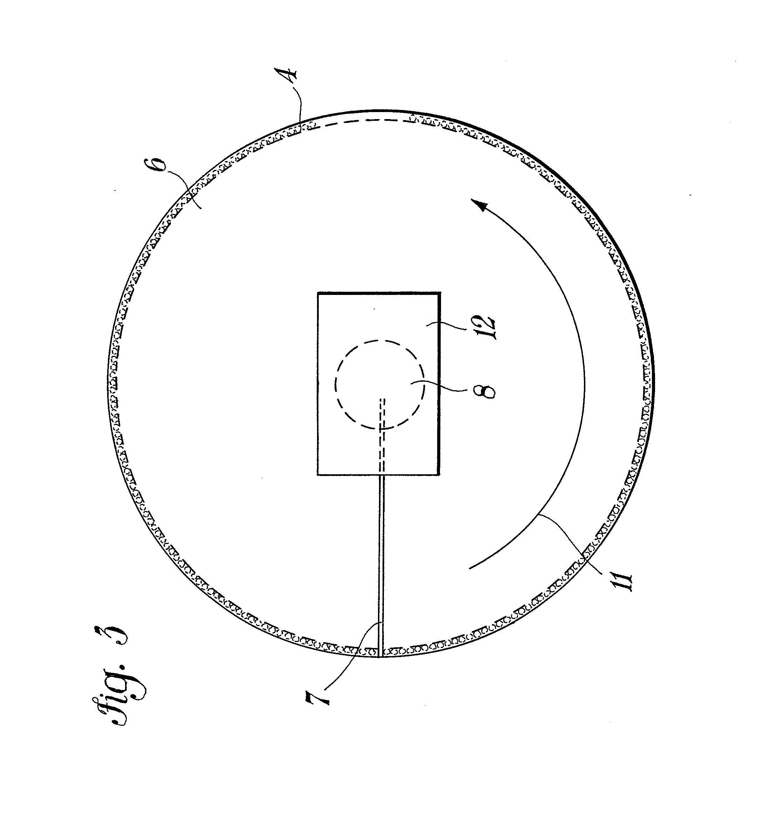

The scanning of one line of optical fibers, i.e. the complete scanning of the optical fibers which the linear sensor 2 consists of corresponds to each rotation of the disk 6, which according to the embodiment shown in the figures mentioned above rotates in the direction of the arrow 11 of Figure 3.

It is clearly evident that the speed of rotation of the disk 6 can be varied according to the needs in question.

The circumference of the cylinder 5 can be longer than the length of the linear sensor 2, so that a very short time interval is generated between the reading of the first and that of the $n^{th}$ of the n optical fibers of the bundle.

Moreover, by arranging a lighting system (as for instance a LED) on the first or on the last of said n optical fibers, the light detected in the circular scanning will be higher with respect to that of the other fibers, so that the beginning or the completion of a scanning is signaled, and the line synchronism of said scanning can be determined.

The reference number 12 points out the protection provided for the light-sensitive element 8, whereas number 13 points out the connection cables to the video electronic section which will be of the type commercially available at the present time.

Cables for the connection to the supply and the control section of the motor 9 are pointed out in turn with the reference number 14.

It is clearly evident that the relative motion between the sensor 2 and the object to be examined, a motion that consists in the other scanning which will be opportunely stored into a standard digital storage and then transformed into a televisional image, can be made up of either the motion of the sensor 2 with respect to the object, or of the motion of the latter with respect to the sensor 2.

If a very high resolving power is wanted, so that a very high number of optical fibers forming the bundle 1 is provided, instead of increasing the sizes of the disk 6 it will be possible to arrange the n fibers along two or more concentric alignments by previously arranging opportunely the cylinder 5, the disk 6 having to be realized so as to bear a number of holes equal to that of the alignments, one optical fiber 7 corresponding to each one of said holes.

Said optical fibers 7 will be all connected to the same light-sensitive element, so that the sensitivity of the device is increased

- 8 -

0233156

or said optical fibers will be connected to different light-sensitive elements so that a higher resolving power is obtained.

Similarly, if more bundles 1 are to be scanned by means of the same disk 6, it will suffice to arrange such bundles concentrically about the cylinder 1, the disk 6 having to be previously prepared according to the same technical artifices disclosed above.

The present invention has been disclosed with particular reference to some specific embodiments of the same, but it is to be understood that modifications and changes can be introduced in the same by those who are skilled in the art without departing from the spirit and scope of the invention for which a priority right is claimed.

- 9 -                          0233156

CLAIMS:

1. An optical fiber scanning device for the formation of a televisional image, said device being characterized in that it comprises a bundle of n optical fibers aligned in a straight line at one end, and kept in a straight line alignment by supporting means so as to form a linear scanning member and, at the other end, circularly aligned and arranged about a supporting member; said device also being characterized by the fact of comprising a rotatable disk member arranged above said supporting member and provided with a hole obtained on a circumference corresponding to the circumference formed by the second end of said n optical fibers, a single optical fiber being arranged at a point corresponding to said hole, such optical fiber being rotatable integrally with said disk member; as well as by the fact of comprising motor means for driving said rotatable disk, a light-sensitive element connected to said single optical fiber, digital storage means as well as means for transforming circular scanning into a television image being connected to said light-sensitive element.

2. A scanning device according to claim 1, characterized in that said single optical fiber is of sizes equal to those of the single fibers of the bundle.

3. A scanning device according to claims 1 or 2, characterized in that said n optical fibers forming the bundle are arranged along more than one concentric circumference about said supporting member, a number of holes being provided on said rotatable disk member equal to the number of said concentric circumferences and a corresponding number of optical fibers which are all connected to said light-sensitive element is also provided on said rotatable disk member.

0233156

4. A scanning device according to claim 3, characterized in that said optical fibers which are equal in number to said holes are each one connected to a different light-sensitive element.

5. A scanning device according to claim 1 or 2, characterized in that m bundles of n optical fibers are provided, such bundles being arranged along concentric circumferences about said supporting member, m holes and m optical fibers connected to m light-sensitive elements being provided on said rotatable disk member.

6. A scanning device according to claims 1-5, characterized in that said light-sensitive member is made up of a photomultiplier.

7. A scanning device according to claims 1 or 5, characterized in that the circumference of said supporting member is longer than the linear length of the ends of the bundle of fibers which are aligned in a straight line.

8. A scanning device according to claims 1 or 5, characterized in that a lighting system, more particularly a LED, is provided on the first or on the last of the n fibers of said bundle.

9. An optical fiber scanning device for the formation of a television image according to anyone of the preceding claims and substantially as illustrated and disclosed above.

*Fig. 1*

1/4

Fig. 2

0233156

*Fig. 3*

*Fig. 4*

3

2